# EUROPEAN PATENT SPECIFICATION

(11) **EP 3 613 173 B1**
(45) Date of publication and mention of the grant of the patent: **01.09.2021**
(21) Application number: 17733382.0
(22) Date of filing: 13.06.2017
(51) Int. Cl.: H04L 12/24, G06N 3/04, G06N 3/08

(54) **A METHOD, AN APPARATUS AND A SYSTEM FOR DETECTING ALARM DATA**
VERFAHREN, VORRICHTUNG UND SYSTEM ZUR DETEKTION VON ALARMDATEN
PROCÉDÉ, APPAREIL ET SYSTÈME DE DÉTECTION DE DONNÉES D'ALARME

(43) Date of publication of application: 26.02.2020
(73) Proprietor: Huawei Technologies Co., Ltd., Longgang District Shenzhen, Guangdong 518129 (CN)
(72) Inventor: WANG, Hongbin, 80992 Munich (DE); THIYAGARAJAH, Janakiraman, 80992 Munich (DE); LV, Peng, 80992 Munich (DE); DE MATTEIS, Luca, 80992 Munich (DE); AGAPITOS, Alexandros, 80992 Munich (DE)
(74) Representative: Grünecker Patent- und Rechtsanwälte PartG mbB
(86) International application number: PCT/EP2017/064390
(87) International publication number: WO 2018/228672

(56) References cited:
- US-A1- 2017 118 092
- SAEED SALAH ET AL: "A model-based survey of alert correlation techniques", COMPUTER NETWORKS, vol. 57, no. 5, 1 April 2013 (2013-04-01), pages 1289-1317, XP055110638, ISSN: 1389-1286, DOI: 10.1016/j.comnet.2012.10.022
- HSIN-CHIEH CHAO ET AL: "Modified adaptive resonance theory for alarm correlation based on distance hierarchy in mobile networks", NETWORK OPERATIONS AND MANAGEMENT SYMPOSIUM (APNOMS), 2011 13TH ASIA-PACIFIC, IEEE, 21 September 2011 (2011-09-21), pages 1-4, XP032021468, DOI: 10.1109/APNOMS.2011.6076958 ISBN: 978-1-4577-1668-3

## Description

### BACKGROUND

A telecommunication network may comprise different nodes or network elements, such as mobile phones, base stations or transmission links. The telecommunication network may comprise millions of linked components in an environment that is constantly changing. The nodes generate tests and monitor parameters to maintain the connection to the network. An alarm data may be generated when the node, network element or a terminal connected to the network does not function within predetermined parameters. As an example, a base station antenna may malfunction, causing communication errors to the terminals connected to the base station. The terminals and the base station may send alarm data to the telecommunication network management system.

S. Sala et al., in a paper entitled "A model-based survey of alert correlation techniques", Computer Networks, vol. 57, no. 5, 1 April, 2013, pages 1289-1317, teach a number of alarm correlation techniques. A correlation process model is taught that comprises alert preprocessing performed for providing different alarms in a unified format, alert reduction in order to avoid redundancies, and alert priorization (section 5.4). Iterations are established between alert reduction and alert reduction. Hyper-alerts are output by the alert correlation module and fed back as inputs to the alert reduction module.

US 2017/118092 A1 discloses an adaptive notification and ticketing system in a telecommunication network, wherein the system comprises machine learning processing based on feedback loops.

A large network generates large volumes of alarm data. The alarm data does not always directly indicate the faulty component that may be a root cause for the problem, instead the alarm data may be generated in other components linked to the faulty component. Alarm data generation may sometimes comprise massive bursts. The telecommunication network management system should isolate the most relevant alarm data from the large volume generated daily by all kinds of network elements or components and, if possible, indicate the root cause behind the alarm data. The network administrator should address the problem as soon as possible to mitigate the problem or to prevent the problem from escalating any further.

### SUMMARY

This summary is provided to introduce a selection of concepts in a simplified form that are further described below in the detailed description.

The telecommunication network management system may receive alarm data having several attributes simultaneously from various sources, thereby giving hints of the actual fault. As one case example, a wireless network may receive multiple error messages from the handsets connected to the network. That may result from a base station failure, wherein the base station is the root cause. The received batch of alarm data comprises a pattern in the time domain and in the dimensions defined by the network parameters. The network parameters in the alarm data may be different according to the component, node, element or terminal sending the alarm data.

It is provided a method according to claim 1 and a system according to claim 5.

The first aspect discloses a method that comprises receiving, by a generator unit, real alarm data comprising alarm events and network parameters, from a network element; generating, by the generator unit, modified alarm data by selecting and modifying at least one network parameter of the real alarm data. Further, the generator unit is trained by iterating through the following steps: evaluating, by a discriminator unit, the modified alarm data against the real alarm data; based on the evaluation results, generating, by the discriminator unit, feedback to be provided to the generator unit; and generating, by the generator unit based on the feedback new modified alarm data. These iterative steps are repeated using the new modified alarm data as modified alarm data, wherein the modified alarm data approaches the real alarm data at the discriminator unit. In particular, the iterative method steps are repeated until the discriminator unit cannot distinguish between the modified alarm data and the real alarm data, that is, when the difference between the modified alarm data and the real alarm data falls below a given threshold. Generating modified and/or new modified alarm data comprises a step of selecting and modifying at least one network parameter based on the feedback received from the discriminator unit, wherein the feedback is weighted by a policy unit according to a policy metrics based on information about whether the previously generated modified alarm data is evaluated as true or false alarm data, wherein the modified and/or new modified alarm data is generated in a first recurrent neural network of the generator unit.

The network is a telecommunication network. The network element may be any component, node or a terminal connected to the telecommunication network. The real alarm data may be a single data event or a batch of alarm events. The method also comprises generating modified alarm data by modifying at least one network parameter of the real alarm data; forming a first data group from the real alarm data and a second data group from the modified alarm data; and detecting an alarm pattern from the first data group by performing steps in a recurrent neural network. A recurrent neural network (RNN) is a class of artificial neural network where connections between units form a directed cycle.

The real alarm data comprises alarm events and network parameters from a network element. The alarm data may comprise different parameters according to the source device. Therefore, the real alarm data may contain parameters that are interrelated between multiple network elements or parameters that relate only to a single element. The recurrent neural network is taught by adding the modified alarm data around the real alarm data, thereby populating a parameter landscape. The recurrent neural network learns to detect real alarm data events and more complex patterns having a batch of real alarm data. In other words, the recurrent neural network may iterate itself to the real-world situation. Real alarm events may be monitored continuously. The data may be output to a telecommunication network management system, flagging serious situations being developed and enabling it to fix the fault situation before it escalates.

In an implementation of the first aspect, the step of evaluating the modified alarm data is performed in a second recurrent neural network of the generator unit.

In a further implementation of the first aspect, the method further comprises the steps of: assigning by an attention unit a score metrics to alarm events of the real alarm data according to a ranking order of alarm data, and providing the score metrics to the generator unit, wherein the score metrics are generated in a third neural network within the attention unit.

In a further implementation of the first aspect, the method further comprises the steps of: receiving by the generator unit a sequence of N real alarm data; predicting by the generator unit the next, N+1, real alarm data; and providing by the attention unit the score metrics for the past N alarm data.

Given a sequence of N real alarm data (i.e., historical alarm data) the generator unit is able to learn supported by the attention unit a generative model, which is then used to generate new alarm data and indicate root alarms for further alarm events. The prediction accuracy of the generator unit is thus improved.

The second aspect discloses a system, comprising a generator unit configured to receive real alarm data comprising alarm events and network parameters from a network element and to generate modified alarm data by selecting and modifying at least one network parameter of the real alarm data and a discriminator unit, configured to evaluate the modified alarm data against the real alarm data, and to provide feedback on the difference between the real alarm data and the modified alarm data to the generator unit; and wherein the generator unit is configured to generate based on the provided feedback new modified alarm data, and wherein the generator unit is configured to be trained by repeated iteration of the evaluation by the discriminator unit, generation of the feedback by the discriminator unit and generation of the new modified alarm data by the generator unit using the new modified alarm data as modified alarm data until the difference between the modified alarm data and the real alarm data falls below a given threshold; and further comprising a policy unit configured to transfer the feedback from the discriminator unit to the generator unit, wherein the feedback is weighted by the policy unit according to a policy metric based on information about whether the previously generated modified alarm data is evaluated as true or false alarm data.

The system may be a network management system configured to detect various failure patterns in the network. The system is configured to utilize a recurrent neural network. The system may be implemented as a telecommunication network monitoring system, network management system or network operating system. The system may be configured to provide root cause information to help network operators manage the alarm events. As one case example, alarm data received from mobile terminals from the same geographical area may be caused by a faulty base station. The system may detect the pattern and indicate the faulty base station, even if the base station itself does not produce any alarm data.

The system comprises multiple recurrent neural networks, wherein the system may detect a pattern in the sequence of alarm events. The system may comprise a distributed architecture, wherein at least one component of the system may reside in a cloud computing environment.

The recurrent neural network identifies patterns that may be used with root cause analysis on the received alarm data. The alarm data may be compressed significantly, as the root cause may be identified faster and with improved accuracy. A generative recurrent neural network model enables prioritizing alarms, alarm data batches or alarm data patterns, providing attention to particular events. The recurrent neural network may predict faults or problems before they fully escalate. For example, an increased wireless signal attenuation in a particular geographical area may indicate a problem in the wireless network even before the network element fails completely. The disclosed solution may be applied to perform root cause analysis (RCA) for any telecommunication network including a fixed network, a mobile network or a cloud computing environment having multiple interconnected computers. The solution may also be applied to sequential discrete data, such as sequential text data.

In an implementation of the second aspect, the system comprises an attention unit, configured to generate using a third neural network a score metrics and to assign the score metrics to alarm events of the real alarm data according to a ranking order of alarm data, and to provide the score metrics to the generator unit, wherein the policy unit is configured to weight the feedback according to the score metrics associated with the alarm events.

In a further implementation of the second aspect, the attention unit is further configured to provide to the generator unit the score metrics for the past N alarm data; and the generator unit is further configured to receive a sequence of N real alarm data; and to predict the next, N+1, real alarm data.

In a further implementation of the second aspect, the system is configured to provide an alarm pattern and an alarm score in response to receiving an alarm event.

The third aspect discloses a computer program product comprising instructions, which when the program is executed by a computer, cause the computer to carry out the steps of the method according to the first aspect.

Many of the attendant features will be more readily appreciated as they become better understood by reference to the following detailed description considered in connection with the accompanying drawings. The embodiments described below are not limited to implementations which solve any or all the disadvantages of known radio frequency identification tags or transponders.

### BRIEF DESCRIPTION OF THE DRAWINGS

The present description will be better understood from the following detailed description read in light of the accompanying drawings, wherein
FIG. 1 illustrates schematically an environment for practicing embodiments of the present invention;
FIG. 2 illustrates schematically an architecture of one embodiment;
FIG. 3 shows a simplified model of a multi-layer recurrent neural network;
FIG. 4 shows a simplified diagram of the functionality of a generator unit;
FIG. 5 shows a simplified diagram of the functionality of a discriminator;
FIG. 6 shows a simplified diagram of the functionality of a policy unit; and
FIG. 7 shows a simplified diagram of the functionality of an attention unit.

Like reference numerals are used to designate like parts in the accompanying drawings.

### DETAILED DESCRIPTION

The detailed description provided below in connection with the appended drawings is intended as a description of the present examples and is not intended to represent the only forms in which the present example may be constructed or utilized. However, the same functions and sequences may be accomplished by different examples.

Although the present examples are described and illustrated herein as being implemented in a mobile telecommunication network, the apparatus described is provided as an example and not a limitation. As those skilled in the art will appreciate, the present examples are suitable for application in a variety of different types of communication networks having the capability to transmit and receive alarm data between nodes, components, terminals or network elements.

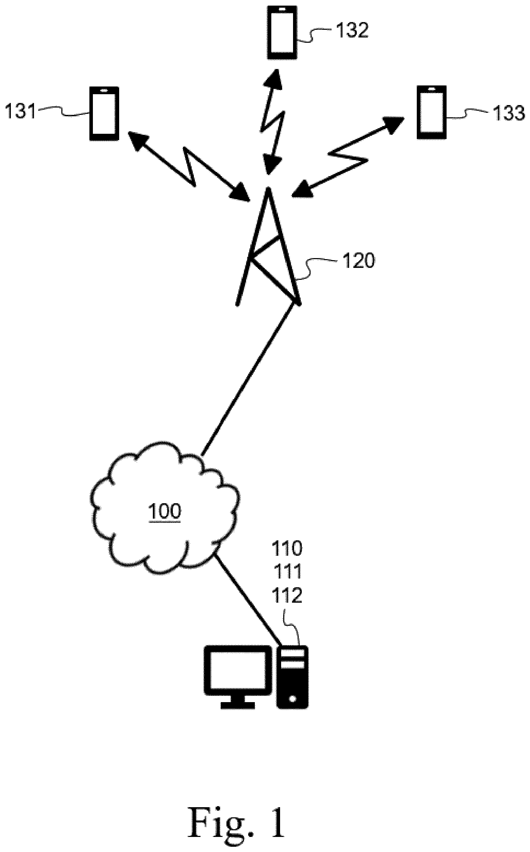

FIG. 1 illustrates schematically one example of a telecommunication network. In this example, wireless terminals 131, 132, 133 are wirelessly connected to a base station 120. A telecommunication network 100 is represented by a cloud - the telecommunication network 100 may be implemented in various ways. An apparatus 110 is connected to the telecommunication network 100. The apparatus 110 comprises at least one processor 111 and a memory 112 for storing instructions that, when the instructions are executed, cause the apparatus 110 to perform the functionality described hereinafter. The apparatus 110 is, in one example, configured to monitor, operate or manage the telecommunication network 100, manage the alarm data and provide further actions to minimize the damage caused by the faulty devices. In one embodiment, the apparatus 100 comprises a user interface for the network management. In one embodiment, the apparatus 100 is a distributed system residing at least partially in a cloud computing environment, wherein the user interface is within reach of the network management personnel.

The telecommunication network 100 comprising a large number of components and elements generates a vast amount of high-speed alarm data. The operator must monitor all incoming alarm events and make decisions to resolve the situation. A Root Cause Analysis (RCA) system described hereinafter may be used to detect situations from the alarm data. The alarm events are not always independent, some alarms may indicate directly the problem, thereby being root cause alarms - some alarms may be regarded as derived alarms. Following the example of wireless terminals 131, 132, 133 and the base station 120, faults in the base station 120 may generate alarm data from the wireless terminals 131, 132, 133. When the root alarm, for example, the faulty base station 120, is identified and resolved, related derived alarms will be automatically cleared. With the learning ability of the recurrent neural network, hand-crafted rules or statistical analysis methods for the RCA are not required.

The RCA enables detecting from the historical alarm data the actual alarm data generation process. Further, the RCA enables finding out the relations between alarms or patterns within alarms. These rules or patterns can be used to detect and isolate root alarms and compress the derived alarms. The given historical sequential discrete event data (a sequence of length N) is used to learn the sequential data generation process and detect the relations between events or patterns within events. That is, the trained Generator unit will predict next coming event, N+1, from a sequence of N discrete event data. The Attention unit will output the scores for past N events to indicate which one is most likely to be the influential event.

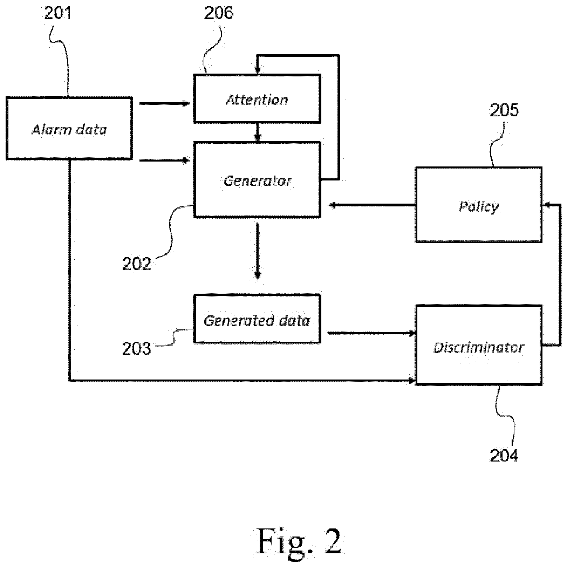

FIG. 2 illustrates schematically an architecture of one embodiment of the system with its functional units comprising at least one neural network. The architecture enables machine learning a generative model from discrete sequential data. The learning process starts by entering historical sequential data, the real alarm data 201 to the system. The real alarm data 201 is, in one example, a first data group having a sequential form of network parameters in time domain. The real alarm data comprises network parameters from the network element, the network elements may vary and the real alarm data 201 relates to the function of the network element sending the real alarm data. The architecture may adapt to different parameter sets and to different situations. The training process may comprise two training paths.

According to a first training path, the system learns by adversarial training. The generator unit 202 is configured to generate modified alarm data 203 from the real alarm data. The generator unit comprises a recurrent neural network to generate sequential modified alarm data 203. The real alarm data 201 comprises parameters in a given dimension, wherein the generator unit 202 may provide random variation to at least one parameter, thus forming the modified alarm data 203. In an embodiment, the modified alarm data 203 is generated by selecting and modifying at least one network parameter of the real alarm data 201. The discriminator unit 204 is configured to receive the modified sequential alarm data 203 and the real sequential alarm data 201.

The discriminator unit 204 is configured to discriminate whether the modified alarm data 203 is true or false data. The discriminator unit 204 comprises a recurrent neural network to discriminate the data. The discriminator unit 204 sends the result to the generator unit 202 as a feedback through a policy unit 205 for adjusting the recurrent neural network. The policy unit 205 comprises a recurrent neural network (RNN) to connect the generator unit 202 and the discriminator unit 204. The recurrent neural network of the generator unit 202 is weighted according to a policy metrics based on the information if the previously generated modified alarm data 203 is discriminated as true or false alarm data. The system continues the iteration until the discriminator unit 204 cannot tell the difference between the modified alarm data 203 and the real alarm data 201. An attention unit 206 comprises a fully connected neural network to pay attention to important past events.

According to a second training path, the system learns by self-supervised training. The generator unit 202 is configured to learn local statistical patterns in sequential data through manipulating historical data to create supervised data artificially. The step of selecting and modifying in the generator unit 202 the at least one network parameter is weighted according to an alarm event score metrics provided by the attention unit 206, based on a sequence of alarm events. In one embodiment, the trained generator unit 202 may be used to predict a next coming event while monitoring live incoming streaming alarm data. The attention unit 206 is configured to output the scores for past N events to indicate which one is most likely to be the influential event. The N represents number of the events in sequential order.

In the following, the functionality of each unit and component is explained in detail. The generator unit 202 may be regarded as a core component of the system. It is configured to learn a generative model for producing sequential data. A generative model is a data generation machine being able to generate the modified alarm data 203 having the appearance of the real alarm data 201. For example, the parameter space of the real alarm data 201 defines the dimensions in which the generator unit 202 may operate. The real parameter value may be altered for the modified alarm data 203. One real alarm data event 201 may be used to generate multiple modified alarm data events 203. The modified alarm data 203 is, in one example, a data group having a sequential form of network parameters in time domain.

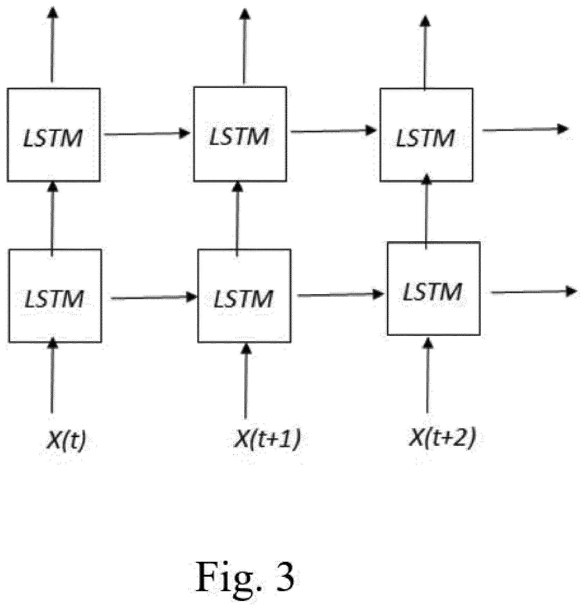

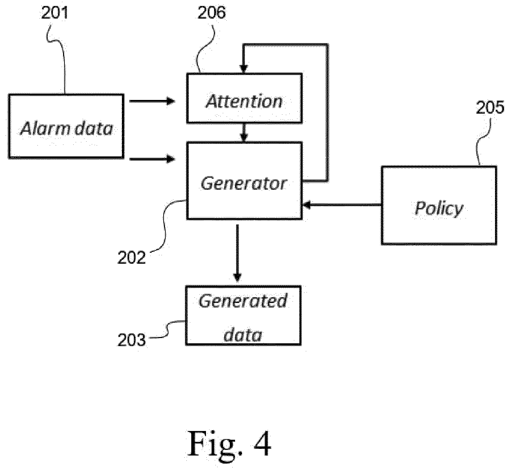

FIG. 3 shows a simplified model of the multi-layer recurrent neural network (RNN) with long short-term memory (LSTM) or with gated recurrent unit (GRU). The generator unit 202 is configured to operate according to the model of FIG. 3, wherein the recurrent neural network of the generator unit 202 is a first recurrent neural network. An LSTM network is an artificial neural network that contains LSTM units instead of, or in addition to, other network units. An LSTM unit is a recurrent network unit that may remember values for either long or short durations of time. It uses no activation function within its recurrent components. Thus, the stored value is not iteratively squashed over time, and the gradient or blame term does not tend to vanish when backpropagation through time is applied to train it. A GRU network comprises fewer parameters than LSTM, as the units lack an output gate. FIG. 4 shows a simplified diagram of the functionality of the generator unit 202. The inputs to the generator unit 202 are: historical sequential data, alarm data batches, attention unit 206 weights and policy unit 205 weights. The outputs of the generator unit 202 are: generated sequential modified alarm data and feedback to the attention unit 206.

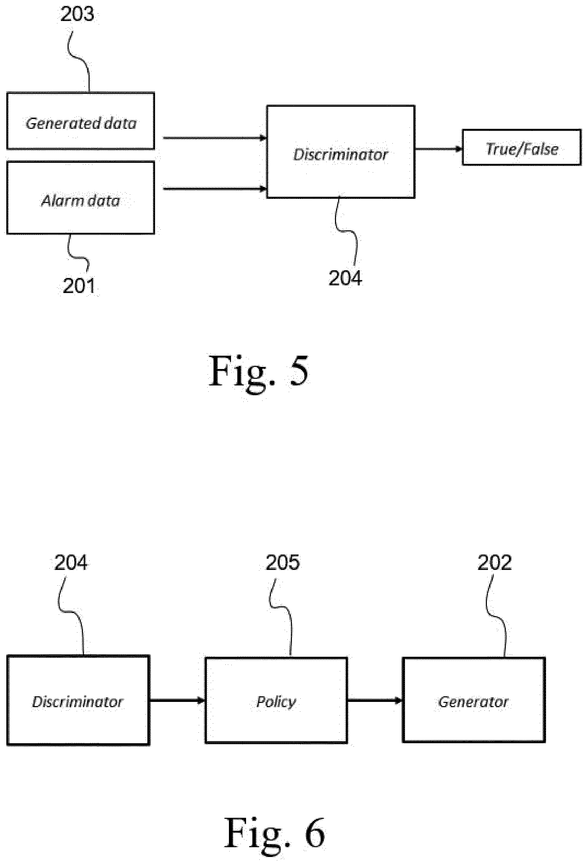

The discriminator unit 204 is configured to evaluate the modified alarm data 203 against the real alarm data 201 - for example, the similarity of the modified alarm data 203 and the real alarms data 201. The discriminator unit 204 is also configured to operate according to the model of FIG. 3, represented as a multi-layer recurrent neural network with LSTM or GRU, wherein the recurrent neural network of the discriminator unit 204 is a second recurrent neural network. The discriminator unit 204 applies different parameters than the generator unit 202. FIG. 5 shows a simplified diagram of the functionality of the discriminator unit 204. The discriminator unit 204 is trained with inputs of modified alarm data 203 and real alarm data 201 in sequential form. The output of the discriminator unit 204 is whether the input sequential modified alarm data 203 is true or not.

The policy unit 205 is also configured to operate according to the model of FIG. 3, represented as a multi-layer recurrent neural network with LSTM or GRU, wherein the recurrent neural network of the policy unit 205 is a fourth recurrent neural network. FIG. 6 shows a simplified diagram of the functionality of the policy unit 205. The policy unit 205 is configured to transfer the feedback as policy metrics from the discriminator unit 204 to the generator unit 202, allowing the generator unit 202 to adjust its parameters accordingly.

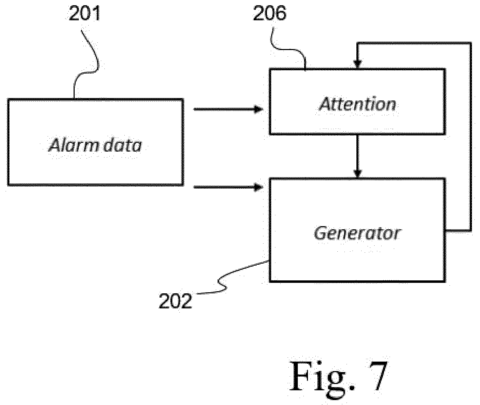

The attention unit 206 is a fully connected neural network, in one example, a third neural network. The attention unit is configured to pay attention to an important event occurring in the past, thereby detecting a root alarm. The attention unit 206 is trained with the input received from the generator unit 202 and the real alarm data 201, the historical sequential data in a self-supervised manner. FIG. 7 shows a simplified diagram of the functionality of the attention unit 206. The inputs from the generator unit 202 and the real alarm data 201 are sequential events. The attention unit 206 is configured to output a score metrics for each event according to its importance detected by the neural network. An important event, such as the root alarm from the base station 120, provides a high score and an ordinary event, such as a derived alarm from the wireless terminals 131, 132, 133, results in a low score.

The system is trained with the generator unit 202, the discriminator unit 204, the policy unit 205 and the attention unit 206. The two training paths, adversarial training and self-supervised training, improve the learning capability and robustness of the system.

The adversarial training may be regarded as a two-party game, wherein one party acts as the generator unit 202 and another party acts as the discriminator unit 204. The generator unit 202 is configured to generate false data by modifying the parameters of the real alarm data 201, trying to fool the discriminator unit 204. The discriminator unit 204 is configured to indicate the difference between the true data and false data. The output information from the discriminator unit 204 is fed back to the generator unit 202 through the policy unit 205. The generator unit 202 is configured to update its parameters as a response to the feedback information.

The detailed algorithm of the adversarial training may be presented as minibatch stochastic gradient descent training of a policy guide adversarial recurrent neural network. In the following example, D represents the discriminator unit 204; P is the policy unit 205; k is the number of steps to update D; an episode is a segment of L time-continuous events such as the batch of sequential alarm data:
For number of training iterations do
For k steps do
Sample minibatch of m generated episodes {g_1, g_2, ... , g_m} from Generator unit G.
Sample minibatch of m episodes {x_1, x_2, ... , x_m} from historical dataset comprising real alarm data.
Update Discriminator D by minimizing the cost function: L = Sum(log(d(x)) + log(1-(D(g)) End
Update Policy P using output scores from the discriminator D.
Use Policy P to sample minibatch of m generated episodes {g_1, g_2, ... , g_m} from Generator unit G
Update Generator unit G by maximizing log(D(g))
End

The second training path, the self-supervised training may be presented as stochastic gradient descent training of an attentional recurrent neural network, wherein G is the generator unit 202, A is the attention unit 206 and L is the size of a time window.

For number of training iterations do

Choose a time stamp t, collect an episode data {x_t-L, ..., x_t-1} as input, x_t as target Update Generator unit G and Attention A by optimizing the cross entropy loss between predicted output y_predict and target_t.

End until no improvement on lost function.

After the model has been trained with the historical alarm data 201, the generator unit 202 has been trained with the attention unit 206. In this example, the discriminator unit 204 and the policy unit 205 are not used. With incoming alarm events having real alarm data 201, the trained generator unit 202 may be able to predict and generate the next following alarm events. The modified alarm data 203 from the training phase represents the prediction after completing the training phase. The attention unit 206 is configured to indicate which alarm data in the past is mostly likely to be the root cause.

In one embodiment, receiving a real alarm event causes the generator unit 202 and the attention unit 206 to provide an alarm pattern and an alarm score. For example, when the generator unit 202 receives an error message, real alarm data from a base station 120, it predicts that terminals 131, 132, 133 being in the serving cell of the base station 120 will send further alarm data. In an embodiment, multiple real alarm events comprise a sequence having a pattern in time domain, wherein the generator unit 202 and the attention unit 206 detect the pattern.

At the system level, both training paths may be used to teach the generative model. In one embodiment, the system applies variational autoencoders (VAE) to learn underlying data distribution.

In one embodiment, the generator unit 202, the discriminator unit 204 and the policy unit 205 are represented as a multi-layer recurrent neural network (RNN) with neurons such as LSTM or GRU, but a third neuron type may be applied to the architecture. The attention unit 206 represents a fully connected network. The attention unit 206 may be implemented with other learning models such as a weighted regression model.

Alternatively, or in addition, the functionality described herein can be performed, at least in part, by one or more hardware components or hardware logic components. An example of the control system described hereinbefore is a computing-based device comprising one or more processors which may be microprocessors, controllers or any other suitable type of processors for processing computer-executable instructions to control the operation of the device in order to control one or more alarm data, receive alarm data, batch of alarm data and use the alarm data. The computer-executable instructions may be provided using any computer-readable media that is accessible by a computing-based device. Computer-readable media may include, for example, computer storage media, such as memory and communications media. Computer storage media, such as memory, includes volatile and non-volatile, removable and non-removable media implemented in any method or technology for storage of information, such as computer-readable instructions, data structures, program modules, program units or other data. Computer storage media includes, but is not limited to, RAM, ROM, EPROM, EEPROM, flash memory or other memory technology, CD-ROM, digital versatile disks (DVD) or other optical storage, magnetic cassettes, magnetic tape, magnetic disk storage or other magnetic storage devices, or any other non-transmission medium that can be used to store information for access by a computing device. In contrast, communication media may embody computer-readable instructions, data structures, program modules, program units, or other data in a modulated data signal, such as a carrier wave, or other transport mechanism. As defined herein, computer storage media does not include communication media. Therefore, a computer storage medium should not be interpreted to be a propagating signal per se. Propagated signals may be present in a computer storage media, but propagated signals per se are not examples of computer storage media. Although the computer storage media is shown within the computing-based device, it will be appreciated that the storage may be distributed or located remotely and accessed via a network or other communication link, for example, by using a communication interface.

The methods described herein may be performed by software in machine-readable form on a tangible storage medium, e.g. in the form of a computer program comprising computer program code means adapted to perform all the steps of any of the methods described herein when the program is run on a computer and where the computer program may be embodied on a computer-readable medium. Examples of tangible storage media include computer storage devices comprising computer-readable media, such as disks, thumb drives, memory etc., and do not only include propagated signals. Propagated signals may be present in a tangible storage media, but propagated signals per se are not examples of tangible storage media. The software can be suitable for execution on a parallel processor or a serial processor such that the method steps may be carried out in any suitable order, or simultaneously. Although at least a portion of the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other features and acts are intended to be within the scope of the claims.

The invention has been described in conjunction with various embodiments herein. However, other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems.

## Claims

1. A method, comprising:
receiving, by a generator unit (202), real alarm data (201) comprising alarm events and network parameters, from a network element;
generating, by the generator unit (202), modified alarm data (203) by selecting and modifying at least one network parameter of the real alarm data (201);
training the generator unit (202) by iterating through the following steps:
evaluating, by a discriminator unit (204), the modified alarm data (203) against the real alarm data (201);
based on the evaluation results, generating, by the discriminator unit (204), feedback to be provided to the generator unit (202); and
generating, by the generator unit (202) based on the feedback new modified alarm data;
repeating the iterative steps using the new modified alarm data as modified alarm data (203) until the difference between the modified alarm data (203) and the real alarm data (201) falls below a given threshold;
wherein generating the modified and/or new modified alarm data (203) comprises a step of selecting and modifying at least one network parameter based on the feedback received from the discriminator unit (204),
wherein the feedback is weighted by a policy unit (205) according to a policy metric based on information about whether the previously generated modified alarm data (203) is evaluated as true or false alarm data; and wherein
the modified and/or new modified alarm data (203) is generated using a first recurrent neural network in the generator unit (202).

2. The method according to claim 1, wherein the step of evaluating the modified alarm data (203) is performed in the discriminator unit (204) comprising a second recurrent neural network.

3. The method according to claim 2, further comprising the steps of:
assigning by an attention unit (206) a score metric to alarm events of the real alarm data (201) according to a ranking order of alarm data, and
providing the score metric to the generator unit (202), wherein the score metric is generated using a third neural network in the attention unit (206).

4. The method according to claim 3, further comprising the steps of:
receiving by the generator unit (202) a sequence of N real alarm data (201);
providing by the attention unit (206) the score metric for the past N alarm data; and
predicting by the generator unit (202) the next, N+1, real alarm data (201) based on the provided score metric.

5. A system, comprising:
a generator unit (202) configured to receive real alarm data (201) comprising alarm events and
network parameters from a network element and to generate modified alarm data (203) by selecting and modifying at least one network parameter of the real alarm data (201),; and
a discriminator unit (204), configured to evaluate the modified alarm data (203) against the real alarm data (201), and to provide feedback on the difference between the real alarm data (201) and the modified alarm data (203) to the generator unit (202); and
wherein the generator unit (202) is configured to generate based on the provided feedback new modified alarm data, and
wherein the generator unit (202) is configured to be trained by repeated iteration of the evaluation by the discriminator unit (204), generation of the feedback by the discriminator unit (204) and generation of the new modified alarm data by the generator unit (202) using the new modified alarm data as modified alarm data (203) until the difference between the modified alarm data (203) and the real alarm data (201) falls below a given threshold; and
further comprising:
a policy unit (205), configured to transfer the feedback from the discriminator unit (204) to the generator unit (202), wherein the feedback is weighted by the policy unit (205) according to a policy metric based on information about whether the previously generated modified alarm data (203) is evaluated as true or false alarm data.

6. The system of claim 5, wherein
the generator unit (202) comprises a first recurrent neural network configured to generate the modified alarm data (203); and
the discriminator unit (204) comprises a second recurrent neural network configured to perform the evaluation of the modified alarm data (203) against the real alarm data (201);
and further comprising:
an attention unit (206), configured to generate using a third neural network and to assign a score metric to alarm events of the real alarm data (201) according to a ranking order of alarm data, and
to provide the score metric to the generator unit, wherein the policy unit is configured to weight the feedback according to the score metric associated with the alarm events.

7. The system according to claim 6,
wherein the attention unit (206) is further configured to provide to the generator unit (202) the score metric for the past N alarm data; and
the generator unit (202) is further configured to receive a sequence of N real alarm data (201); and to predict the next, N+1, real alarm data (201) based on the provided score metric.

8. The system according to any of the claims 5 to 7, **characterized in that** the system is configured to provide an alarm pattern and an alarm score in response to receiving an alarm event.

9. A computer program product comprising instructions, which when the program is executed by a computer, cause the computer to carry out the steps of the method of claims 1 to 4.

## Patentansprüche

1. Verfahren, umfassend:
Empfangen realer Alarmdaten (201), die Alarmereignisse und Netzwerkparameter umfassen, von einem Netzwerkelement durch eine Generatoreinheit (202);
Generieren modifizierter Alarmdaten (203) durch die Generatoreinheit (202) durch Auswählen und Modifizieren mindestens eines Netzwerkparameters der realen Alarmdaten (201);
Trainieren der Generatoreinheit (202) durch Durchlaufen der folgenden Schritte:
Prüfen der modifizierten Alarmdaten (203) gegen die realen Alarmdaten (201) durch eine Diskriminatoreinheit (204);
Generieren einer Rückmeldung, die der Generatoreinheit (202) bereitgestellt wird, durch die Diskriminatoreinheit (204) auf Grundlage der Prüfungsergebnisse; und
Generieren neuer modifizierter Alarmdaten durch die Generatoreinheit (202) auf Grundlage der Rückmeldung;
Wiederholen der iterativen Schritte unter Verwendung der neuen modifizierten Alarmdaten als die modifizierten Alarmdaten (203), bis die Differenz zwischen den modifizierten Alarmdaten (203) und den realen Alarmdaten (201) unter einen vorgegebenen Schwellenwert fällt;
wobei das Generieren der modifizierten und/oder neuen modifizierten Alarmdaten (203) einen Schritt des Auswählens und Modifizierens mindestens eines Netzwerkparameters auf Grundlage der von der Diskriminatoreinheit (204) empfangenen Rückmeldung umfasst,
wobei die Rückmeldung durch eine Richtlinieneinheit (205) gemäß einer Richtlinienmetrik gewichtet wird, die auf Informationen darüber beruht, ob die zuvor generierten modifizierten Alarmdaten (203) als wahre oder falsche Alarmdaten eingestuft wurden; und wobei
die modifizierten und/oder neuen modifizierten Alarmdaten (203) unter Verwendung eines ersten rekurrenten neuronalen Netzwerks in der Generatoreinheit (202) generiert werden.

2. Verfahren nach Anspruch 1, wobei der Schritt des Prüfens der modifizierten Alarmdaten (203) in der Diskriminatoreinheit (204) durchgeführt wird, die ein zweites rekurrentes neuronales Netzwerk umfasst.

3. Verfahren nach Anspruch 2, ferner umfassend die folgenden Schritte:
Zuweisen einer Bewertungsmetrik zu Alarmereignissen der realen Alarmdaten (201) durch eine Aufmerksamkeitseinheit (206) gemäß einer Rangfolge von Alarmdaten und
Bereitstellen der Bewertungsmetrik an die Generatoreinheit (202), wobei die Bewertungsmetrik unter Verwendung eines dritten neuronalen Netzwerks in der Aufmerksamkeitseinheit (206) generiert wird.

4. Verfahren nach Anspruch 3, ferner umfassend die folgenden Schritte:
Empfangen einer Abfolge von N realen Alarmdaten (201) durch die Generatoreinheit (202);
Bereitstellen der Bewertungsmetrik für die vorherigen N Alarmdaten durch die Aufmerksamkeitseinheit (206); und
Vorhersagen der nächsten (N+1) realen Alarmdaten (201) durch die Generatoreinheit (202) auf Grundlage der bereitgestellten Bewertungsmetrik.

5. System, umfassend:
eine Generatoreinheit (202), die dazu konfiguriert ist, reale Alarmdaten (201), die Alarmereignisse und Netzwerkparameter umfassen, von einem Netzwerkelement zu empfangen und durch Auswählen und Modifizieren mindestens eines Netzwerkparameters der realen Alarmdaten (201) modifizierte Alarmdaten (203) zu generieren; und eine Diskriminatoreinheit (204), die dazu konfiguriert ist, die modifizierten Alarmdaten (203) gegen die realen Alarmdaten (201) zu prüfen und der Generatoreinheit (202) eine Rückmeldung über die Differenz zwischen den realen Alarmdaten (201) und den modifizierten Alarmdaten (203) bereitzustellen; und
wobei die Generatoreinheit (202) dazu konfiguriert ist, auf Grundlage der bereitgestellten Rückmeldung neue modifizierte Alarmdaten zu generieren, und
wobei die Generatoreinheit (202) dazu konfiguriert ist, durch wiederholtes Durchlaufen des Prüfens durch die Diskriminatoreinheit (204), des Generierens der Rückmeldung durch die Diskriminatoreinheit (204) und des Generierens der neuen modifizierten Alarmdaten durch die Generatoreinheit (202) unter Verwendung der neuen modifizierten Alarmdaten als die modifizierten Alarmdaten (203), bis die Differenz zwischen den modifizierten Alarmdaten (203) und den realen Alarmdaten (201) unter einen vorgegebenen Schwellenwert fällt, trainiert zu werden; und ferner umfassend:
eine Richtlinieneinheit (205), die dazu konfiguriert ist, die Rückmeldung von der Diskriminatoreinheit (204) an die Generatoreinheit (202) zu übertragen, wobei die Rückmeldung durch die Richtlinieneinheit (205) gemäß einer Richtlinienmetrik gewichtet wird, die auf Informationen darüber beruht, ob die zuvor generierten modifizierten Alarmdaten (203) als wahre oder falsche Alarmdaten eingestuft wurden.

6. System nach Anspruch 5, wobei
die Generatoreinheit (202) ein erstes rekurrentes neuronales Netzwerk umfasst, das dazu konfiguriert ist, die modifizierten Alarmdaten (203) zu generieren; und
die Diskriminatoreinheit (204) ein zweites rekurrentes neuronales Netzwerk umfasst, das dazu konfiguriert ist, die Prüfung der modifizierten Alarmdaten (203) gegen die realen Alarmdaten (201) durchzuführen;
und ferner umfassend:
eine Aufmerksamkeitseinheit (206), die dazu konfiguriert ist, unter Verwendung eines dritten neuronalen Netzwerks eine Bewertungsmetrik gemäß einer Rangfolge von Alarmdaten zu generieren und Alarmereignissen der realen Alarmdaten (201) zuzuweisen und
die Bewertungsmetrik der Generatoreinheit bereitzustellen, wobei die Richtlinieneinheit dazu konfiguriert ist, die Rückmeldung gemäß der den Alarmereignissen zugeordneten Bewertungsmetrik zu gewichten.

7. System nach Anspruch 6,
wobei die Aufmerksamkeitseinheit (206) ferner dazu konfiguriert ist, der Generatoreinheit (202) die Bewertungsmetrik für die vorherigen N Alarmdaten bereitzustellen; und
die Generatoreinheit (202) ferner dazu konfiguriert ist, eine Abfolge von N realen Alarmdaten (201) zu empfangen und die nächsten, N+1, realen Alarmdaten (201) auf Grundlage der bereitgestellten Bewertungsmetrik vorherzusagen.

8. System nach einem der Ansprüche 5 bis 7, **dadurch gekennzeichnet, dass** das System dazu konfiguriert ist, als Reaktion auf den Empfang eines Alarmereignisses ein Alarmmuster und eine Alarmbewertung bereitzustellen.

9. Computerprogrammprodukt, das Anweisungen umfasst, die bei Ausführung des Programms durch einen Computer den Computer dazu veranlassen, die Schritte des Verfahrens nach den Ansprüchen 1 bis 4 durchzuführen.

## Revendications

1. Procédé, comprenant :
la réception, par une unité de génération (202), de données d'alarme réelles (201) comprenant des événements d'alarme et des paramètres de réseau, à partir d'un élément de réseau ;
la génération, par l'unité de génération (202), de données d'alarme modifiées (203) en sélectionnant et en modifiant au moins un paramètre de réseau des données d'alarme réelles (201) ;
la formation de l'unité de génération (202) par l'itération des étapes suivantes :
l'évaluation, par une unité de discrimination (204), des données d'alarme modifiées (203) par rapport aux données d'alarme réelles (201) ;
sur la base des résultats d'évaluation, la génération, par l'unité de discrimination (204), d'une rétroaction à fournir à l'unité de génération (202) ; et
la génération, par l'unité de génération (202) sur la base de la rétroaction, de nouvelles données d'alarme modifiées ;
la répétition des étapes itératives en utilisant les nouvelles données d'alarme modifiées en tant que données d'alarme modifiées (203) jusqu'à ce que la différence entre les données d'alarme modifiées (203) et les données d'alarme réelles (201) tombent en dessous d'un seuil donné ;
dans lequel la génération des données d'alarme modifiées et/ou nouvelles données d'alarme modifiées (203) comprend une étape de sélection et de modification d'au moins un paramètre de réseau sur la base de la rétroaction reçue de l'unité de discrimination (204),
dans lequel la rétroaction est pondérée par une unité politique (205) selon une métrique politique sur la base d'informations indiquant si les données d'alarme modifiées (203) précédemment générées sont évaluées comme des données d'alarme vraies ou fausses ; et dans lequel
les données d'alarme modifiées et/ou nouvelles données d'alarme modifiées (203) sont générées à l'aide d'un premier réseau neuronal récurrent dans l'unité de génération (202).

2. Procédé selon la revendication 1, dans lequel l'étape d'évaluation des données d'alarme modifiées (203) est exécutée dans l'unité de discrimination (204) comprenant un deuxième réseau neuronal récurrent.

3. Procédé selon la revendication 2, comprenant en outre les étapes :
d'attribution par une unité d'attention (206) d'une métrique de score aux événements d'alarme des données d'alarme réelles (201) selon un ordre de classement des données d'alarme, et
de fourniture de la métrique de score à l'unité de génération (202), dans lequel la métrique de score est générée à l'aide d'un troisième réseau neuronal dans l'unité d'attention (206).

4. Procédé selon la revendication 3, comprenant en outre les étapes :
de réception par l'unité de génération (202) d'une séquence de N données d'alarme réelles (201) ;
de fourniture par l'unité d'attention (206) de la métrique de score pour les N dernières données d'alarme ; et
de prédiction par l'unité de génération (202) des N+1 données d'alarme réelles (201) suivantes sur la base de la métrique de score fournie.

5. Système, comprenant :
une unité de génération (202) configurée pour recevoir des données d'alarme réelles (201) comprenant des événements d'alarme et des paramètres de réseau à partir d'un élément de réseau et pour générer des données d'alarme modifiées (203) en sélectionnant et en modifiant au moins un paramètre de réseau des données d'alarme réelles (201) ; et une unité de discrimination (204), configurée pour évaluer les données d'alarme modifiées (203) par rapport aux données d'alarme réelles (201), et pour fournir une rétroaction sur la différence entre les données d'alarme réelles (201) et les données d'alarme modifiées (203) à l'unité de génération (202) ; et
dans lequel l'unité de génération (202) est configurée pour générer sur la base de la rétroaction fournie de nouvelles données d'alarme modifiées, et
dans lequel l'unité de génération (202) est configurée pour être formée par une itération répétée de l'évaluation par l'unité de discrimination (204), la génération de la rétroaction par l'unité de discrimination (204) et la génération des nouvelles données d'alarme modifiées par l'unité de génération (202) en utilisant les nouvelles données d'alarme modifiées en tant que données d'alarme modifiées (203) jusqu'à ce que la différence entre les données d'alarme modifiées (203) et les données d'alarme réelles (201) tombent en dessous d'un seuil donné ; et comprenant en outre :
une unité politique (205), configurée pour transférer la rétroaction de l'unité de discrimination (204) à l'unité de génération (202), dans lequel la rétroaction est pondérée par l'unité politique (205) selon une métrique politique sur la base d'informations indiquant si les données d'alarme modifiées (203) précédemment générées sont évaluées comme des données d'alarme vraies ou fausses.

6. Système selon la revendication 5, dans lequel :
l'unité de génération (202) comprend un premier réseau neuronal récurrent configuré pour générer les données d'alarme modifiées (203) ; et
l'unité de discrimination (204) comprend un deuxième réseau neuronal récurrent configuré pour effectuer l'évaluation des données d'alarme modifiées (203) par rapport aux données d'alarme réelles (201) ;
et comprenant en outre :
une unité d'attention (206), configurée pour générer à l'aide d'un troisième réseau neuronal et pour attribuer une métrique de score aux événements d'alarme des données d'alarme réelles (201) selon un ordre de classement des données d'alarme, et pour fournir la métrique de score à l'unité de génération, dans lequel l'unité politique est configurée pour pondérer la rétroaction selon la métrique de score associée aux événements d'alarme.

7. Système selon la revendication 6,
dans lequel l'unité d'attention (206) est en outre configurée pour fournir à l'unité de génération (202) la métrique de score pour les N dernières données d'alarme ; et
l'unité de génération (202) est en outre configurée pour recevoir une séquence de N données d'alarme réelles (201) ; et pour prédire les N+1 données d'alarme réelles (201) suivantes sur la base de la métrique de score fournie.

8. Système selon l'une quelconque des revendications 5 à 7, **caractérisé en ce que** le système est configuré pour fournir un modèle d'alarme et un score d'alarme en réponse à la réception d'un événement d'alarme.

9. Produit de programme informatique comprenant des instructions qui, lorsque le programme est exécuté par un ordinateur, amènent l'ordinateur à exécuter les étapes du procédé selon les revendications 1 à 4.
